(19) Europäisches Patentamt
European Patent Office
Office européen des brevets

(11) **EP 1 544 176 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(51) Int Cl.:
**C03C 3/118** (2006.01)   **C03C 3/091** (2006.01)
**C03C 3/064** (2006.01)   **C03C 21/00** (2006.01)

(21) Anmeldenummer: **04029811.9**

(22) Anmeldetag: **16.12.2004**

(54) **Alumoborosilikatglas und Verfahren zur Herstellung kristallitfreier Gradientenindexlinsen**

Alumino-boro-silicate glass and process to make crystal-free Gradient Index Lenses

Verre alumino-boro-silicaté et procédé de fabrication de lentilles à gradient d'indice exemptes de cristaux

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.12.2003 DE 10361555**

(43) Veröffentlichungstag der Anmeldung:
**22.06.2005 Patentblatt 2005/25**

(73) Patentinhaber: **GRINTECH GmbH**
**07745 Jena (DE)**

(72) Erfinder:
• **Messerschmidt, Bernhard, Dr.**
 **07743 Jena (DE)**
• **Rüssel, Christian, Prof. r.,**
 **07751 Jena-Cospeda (DE)**
• **Hornschuh, Sandra**
 **07743 Jena (DE)**
• **Possner, Torsten, Dr.**
 **07745 Jena (DE)**
• **Possner, Ulf**
 **07745 Jena (DE)**

(74) Vertreter: **Freitag, Joachim**
**Patentanwälte**
**Oehmke & Kollegen**
**Neugasse 13**
**07743 Jena (DE)**

(56) Entgegenhaltungen:
EP-A- 0 918 235        EP-A- 1 106 586
DE-A1- 3 803 420       US-A- 4 902 330
US-A1- 2003 045 420

• HORNSCHUH S ET AL: "Silver ion exchange in glasses of the system Na2O/Al2O3/B2O3/SiO2" JOURNAL OF NON-CRYSTALLINE SOLIDS, NORTH-HOLLAND PHYSICS PUBLISHING. AMSTERDAM, NL, Bd. 347, Nr. 1-3, 1. November 2004 (2004-11-01), Seiten 121-127, XP004640721 ISSN: 0022-3093

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein alkalimetallhaltiges Alumoborosilikatglas, das zumindest in einem Teil seines Volumens Silberionen enthält, die in ein Basisglas aus Siliziumoxid, Boroxid, Aluminiumoxid und mindestens einem Alkalimetalloxid durch Ionenaustausch gegen Alkalimetall-Ionen eingebracht werden, insbesondere für Gradientenindexlinsen (GRIN-Linsen), sowie ein Verfahren zur Herstellung von GRIN-Linsen und anderen optischen Elementen mit mindestens partiell erhöhtem oder erniedrigtem Brechungsindex.

Im Stand der Technik sind zahlreiche Lösungen zur Herstellung von Gradientenindexlinsen (GRIN-Linsen) bekannt geworden. Die effektivsten basieren auf Borosilikatgläsern, die zum Ionenaustausch geeignet sind, um die Brechzahl zu erhöhen oder partiell zu ändern.

So wird beispielsweise im Patent US 4,902,330 eine Methode zur Herstellung von GRIN-Linsen beschrieben, die auf einem zweistufigen Prozess des Ionenaustausches beruht. Dabei wird in der ersten Stufe durch Einbringen des Ausgangsglases in eine Schmelze mit Silber-, Thallium- oder Lithium-Ionen ein Austausch von Alkalimetallionen bewirkt, um einheitlich den Brechungsindex zu erhöhen, und in der zweiten Phase wird im Glas aus der ersten Phase durch Eintauchen in eine Salzschmelze mit Natrium- oder Kalium-Ionen der Silberionen-Einbau partiell rückgängig gemacht, um einen Gradienten des Brechungsindex zu erzeugen. Dieser zweistufige Prozess wird für Phosphat- und Borosilikatgläser beschrieben, wobei für Borosilikatgläser eine unerwünschte Färbung durch Silberkolloide nachteilig erwähnt wird.

Ein grundlegendes Prinzip der Erzeugung von Brechzahlunterschieden in Gläsern ist in der DD 269 615 B5 beschrieben. Hierin sind Glaszusammensetzungen offenbart, die sich dadurch auszeichnen, dass große Brechzahlunterschiede erreicht werden, indem im Glas enthaltene Oxide dreiwertiger Metalle ($M'''_2O_3$, mit $M'''$: B, Al, Ga) und Oxide einwertiger Metalle ($M'_2O$ mit $M'$: Li, K, Na, Rb) ein Molverhältnis $\geq$ 1,0 aufweisen und ein solches Glas bei einer Temperatur zwischen 210 und 450°C mit Silber, Silberlegierungen, Salzschmelzen oder Lösungen in Kontakt gebracht wird. Die damit einhergehende Einfärbung wird als gering beschrieben. Nachteilig ist jedoch die infolge von thermischen Formgebungsprozessen (Stabziehen oder Floatglasprozess) auftretende Kristallisationsneigung (Nephelin), die sich in den GRIN-Linsen als punkt-oder kettenförmige Defekte bemerkbar machen und Abbildungsdefekte oder Streulicht erzeugen.

Auf ähnlichen Glaszusammensetzungen basiert die Lehre der US 6,511,932 B1, die um einen obligatorischen Zusatz von Magnesiumoxid (von bis zu 18 mol %) erweiterte Glaszusammensetzungen für den Silber/Alkali-Ionenaustausch beansprucht mit dem Vorteil einer erniedrigten Schmelztemperatur. Der Zusatz vom MgO verschlechtert jedoch die Transmission und trägt zu einer vergrößerten Kristallisationsneigung bei.

Den gleichen Ansatz für ein Alumoborosilikatglas zur Erzeugung einer Linse mit axialem Brechzahlgradienten offenbart die EP 0 918 235 A2, wobei durch Zugabe von Magnesiumoxid und/oder Zinkoxid mit einem Molgehalt zwischen 2,5 und 18 mol%, eine Schmelzpunkterniedrigung des Glases für einen schnellen und stabilen Austausch von Silberionen erreicht werden soll. Da jedoch Zinkoxid zu einer Phasenseparation führt, können die angegebenen Molgehalte an ZnO und MgO nur durch höhere MgO-Anteile erzielt werden, wodurch sich dann aber eine unerwünscht höhere Kristallisationsneigung einstellt.

Für die Erzeugung von Gläsern mit ausgedehnter Brechzahlverteilung gibt die DE 38 03 420 A1 an, dass Alumoborosilikatglas, das bei einem Alkalioxidgehalt von 20-35 mol% ein Verhältnis zwischen den Oxiden dreiwertiger Metalle und den Alkalioxiden von $\geq$ 0,8 aufweist, beim Ionenaustausch von Alkali- durch Silberionen eine im UV-Bereich verschobene Absorptionskante und damit eine höhere Transparenz im sichtbaren Spektralbereich hat. Über die Kristallisationsneigung des erstarrten Glases in nachfolgenden thermischen Bearbeitungsprozessen ist nichts jedoch nichts zu entnehmen.

Aus der WO02/14233 A1 ist ferner ein alkalifreies Borosilikatglas bekannt, das bereits einen sehr hohen Silberanteil in der Basisglasschmelze enthält, sodass die Silberionen nicht erst im Ionenaustauschprozess eingebracht werden. Angaben zu Kristallitbildung in der Erschmelzung nachfolgenden thermischen Prozessen sind nicht vorhanden.

Die US 2003/045420 A1 offenbart ein Mutterglas zur Herstellung eines Glases für die Laserbearbeitung durch Verdampfung durch absorbierte Laserenergie, bei dem das Mutterglas Aluminiumoxid und ein Alkalioxid (Natriumoxid) in einem annähernd gleichen Molverhältnis enthält. In das beschriebene Alumoborosilikatglas werden aber erhebliche Molanteile (5 bis 18 mol%) zur Erhöhung der Laserabsorption eingebracht. Solche Anteile sind der Transparenz des Glases abträglich und kommen deshalb für die vorliegende Erfindung nicht in Frage.

In der US 5,007,948, die sich auf im Wesentlichen farblose, durch Ionenaustausch Silber enthaltende Gläsern bezieht, wird zum Zwecke der Vermeidung der Einfärbung durch Silber beschrieben, dass das Glas eine atomare Struktur besitzt, in der der Anteil von nicht brückenbildenden Sauerstoffatomen kleiner als 0,03 ist. Ob dadurch auch die Kristallisationsneigung eine ausreichende Verringerung erfährt, ist nicht entnehmbar.

Ferner sind für die GRIN-Linsenherstellung in der WO 02/14233 A1 alkalifreie Borosilikatgläser mit hohem Silbergehalt beschrieben, in denen der hohe Silbergehalt (von mindestens zwei Kationenprozent) durch "Blockschmelze" im Basisglas ohne Zusatz von Alkaliionen vorhanden sein soll, wobei durch nachträglichen Ionenaustausch in alkalihaltigen Salzschmelzen der Gradient des Brechungsindex erzeugt wird. Ob optisch sichtbare Defekte, wie die durch Kristallisationsneigung des Glases oder andere, hinreichend selten sind oder ausgeschlossen werden können, ist nicht beschrieben und konnte nicht ermittelt werden.

Allen vorstehend genannten Veröffentlichungen mit Silber/Alkali-Ionenaustausch ist der Nachteil gemeinsam, dass es in den gefertigten GRIN-Linsen zu den für Abbildungs- und Beleuchtungssysteme störenden Punktdefekten kommt, wenn das Basisglas eine nicht vernachlässigbare Neigung zu Kristallbildung bzw. eine erhöhtes Kristallwachstum aufweist, sobald thermische Bearbeitungsprozesse (wie thermische Formgebungsverfahren, wie z.B. Stabziehen oder Ionenaustauschprozesse) auf die aus der Glasschmelze erstarrten Glasrohlinge angewendet werden.

Der Erfindung liegt die Aufgabe zugrunde, eine neue Möglichkeit zur Herstellung von GRIN-Linsen auf Basis von Alumoborosilikatgläsern zu finden, bei der das Glas eine deutlich verringerte Kristallisationsneigung aufweist, ohne dass sich solche für herkömmliche Borosilikatgläser bekannten positiven Eigenschaften, wie Erschmelzbarkeit unter glastechnologisch üblichen Temperaturen (bis 1600°C) in optisch guter Qualität und hoher Brechzahlgradient ohne wesentliche Einfärbung nach dem Silbereinbau, verschlechtern.

Erfindungsgemäß wird die Aufgabe durch ein alkalihaltiges Alkalihaltiges Alumoborosilikatglas zur Herstellung von optischen Komponenten mit Brechzahigradienten durch ionenaustausch einwertiger Metallionen, das im Basisglas folgende Anteile aufweist:

$$20 \leq SiO_2 \leq 50 \text{ mol \%}$$

$$10 \leq M'''_2O_3 \leq 20 \text{ mol \%} \qquad (M''' = B, Ga),$$

$$10 \leq Al_2O_3 \leq 35 \text{ mol \%}$$

$$10 \leq M_2O \leq 34 \text{ mol \%} \qquad (M = Li, Na, K, Rb),$$

wobei ein Molverhältnis aller dreiwertigen Metalloxide zu einwertigen Metalloxiden:

$$1{,}5 < \frac{[Al_2O_3] + [M'''_2O_3]}{M_2O} < 2$$

eingestellt ist, um die Kristallisationsneigung des Basisglases für nachfolgende thermische Verarbeitungsprozesse zu reduzieren, und
das weitere Beimengungen hödestens bis zu jeweils 2,5 mol% enthalten kann, wobei die Beimengengen nur entweder MgO oder ZnO enthalten.

Dabei wird bevorzugt folgendes Molverhältnis mit

$$1 < \frac{Al_2O_3}{M_2O} < 1{,}3$$

eingestellt ist.
Vorteilhaft weist das Basisglas ein Molverhältnis im Bereich von

$$1{,}05 \leq \frac{Al_2O_3}{M_2O} \leq 1{,}1$$

auf.

Für alle vorstehenden Varianten enthält das Basisglas zweckmäßig zwischen 15 und 30 mol % $M_2O$, vorzugsweise $Na_2O$.

Es kann sich ferner als zweckmäßig erweisen, wenn das erschmolzene Basisglas bereits Silberoxid in einer Konzentration von bis zu 2 mol % enthält.

Alternativ zum nachträglichen Silberioneneinbau durch Ionenaustausch wird zur Brechzahlerhöhung eines alkalihaltigen Alumoborosilikatglases vorteilhaft ein Basisglas folgender Zusammensetzung erschmolzen:

$$20 \leq SiO_2 \leq 50 \text{ mol \%},$$

$$10 \leq Al_2O_3 \leq 35 \text{ mol \%},$$

$$10 \leq M'''_2O_3 \leq 20 \text{ mol \%} \qquad (M''' = B, Ga),$$

$$10 \leq M_2O \leq 34 \text{ mol \%} \qquad (M = Li, Na, K, Rb),$$

wobei die einwertigen Metalloxide einen Anteil von Lithiumdioxid zwischen 10 und 80 % aufweisen, um eine geeignete Brechzahlanhebung zu erzielen.

Als zusätzliche Beimengungen für alle vorstehend beschriebenen Alumoborosilikatgläser werden vorteilhaft Alkalifluoride, ein oder mehrere Oxide und/oder Fluoride der Metalle Zink, Magnesium, Kalzium, Strontium, Barium, Niob und Tantal in Konzentrationen von jeweils bis zu 3 mol % im Basisglas erschmolzen.

Weiterhin wird die Aufgabe der Erfindung bei einem Verfahren zur Herstellung kristallitfreier optischer Komponenten mit mindestens partiell geänderter Brechzahl unter Verwendung eines Alumoborosilikatglases nach einem oder mehreren der Ansprüche 1 bis 7, mit folgenden Schritten:

- Erschmelzen eines Basisglases der angegebenen Zusammensetzung bei Temperaturen von 1400 - 1600 °C und Homogenisierung der Glasschmelze,
- Gießen der Glasschmelze zur Erzeugung von Halbzeugen für optische Komponenten,
- Formgebung der Halbzeuge zu Rohlingen für einen Ionenaustausch, bei der die Halbzeuge auf eine für den Ionenaustausch geeignete Form verringert werden, wobei die Rohlinge an die gewünschte Abmessung der optischen Komponenten in wenigstens einer für den Ionenaustausch vorgesehenen Dimension senkrecht zu deren optischer Achse angepasst sind,
- Ionenaustausch durch wenigstens einmaliges Einbringen der Rohlinge in eine Salzschmelze, um ein gewünschtes Brechzahlprofil zu erzeugen.

Dabei werden die Rohlinge vorteilhaft durch Schneiden von Platten aus quaderförmigen Halbzeugen (sogenannten Barren des Basisglases) und anschließendes Schleifen oder Polieren bis zu einer Höhe, die gleich oder geringfügig oberhalb der endgültigen Linsenhöhe senkrecht zur optischen Achse ist, hergestellt. Zur Herstellung rotationssymmetrischer Linsen ist es vorteilhaft, aus stabförmigen Halbzeugen (Zylinder) des Basisglases Rohlinge durch Stabziehen bei einer Temperatur zwischen 800 und 1000°C und anschließendes Schneiden, Schleifen oder Polieren bis zu einem Durchmesser, der gleich oder geringfügig oberhalb des endgültigen Linsendurchmessers senkrecht zur optischen Achse ist, herzustellen.

Ebenso werden zur Fertigung von GRIN-Kugellinsen die Rohlinge zweckmäßig aus einem quaderförmigen Halbzeug des Basisglases durch Schneiden von Würfeln und anschließendes Schleifen und Polieren bis zu einer Kugelform, deren Durchmesser gleich oder geringfügig oberhalb des endgültigen Linsendurchmessers ist, hergestellt. Eine weitere vorteilhafte Art der Herstellung von Rohlingen für den Ionenaustausch besteht darin, dass die Rohlinge direkt aus der Schmelze des Basisglases durch einen Floatglasprozess bei einer Temperatur zwischen 800 und 1600°C in einer Plattenhöhe, die gleich oder geringfügig oberhalb der endgültigen Linsenhöhe senkrecht zur optischen Achse ist, hergestellt werden.

Vorzugsweise erfolgt beim Ionenaustausch ein Einbau von Silberionen gegen Alkaliionen durch wenigstens einmaliges Einbringen der Rohlinge in eine silberhaltige Salzschmelze bei Temperaturen zwischen 200 und 600 °C, bis ein gewünschtes Brechzahlprofil eingestellt ist.

Nach dem Einbau der Silberionen werden die Rohlinge vorzugsweise durch Schneiden und anschließendes Schleifen oder Polieren bis zu den gewünschten endgültigen Linsendimensionen senkrecht zu und in Richtung der optischen Achse fertiggestellt.

Die so erzeugten Alumoborosilikatgläser werden vorzugsweise als GRIN-Zerstreuungslinsen verwendet, wobei die Rohlinge auf eine geeignete optische Linsendicke in Richtung der optische Achse und gegebenenfalls geschliffen und poliert werden. Es können aber auch optische Komponenten beim Silbereinbau so ausgebildet werden, dass deren Brechzahlprofil von dem einer herkömmlichen GRIN-Zerstreuungslinse abweicht. Die polierten Flächen können plan, konkav oder auch konvex sein.

Das obige Verfahren wird nach dem Silbereinbau durch mindestens einen weiteren Ionenaustauschprozess in einer alkalihaltigen Schmelze ergänzt, bei dem ein partieller Rücktausch von Silberionen gegen einwertige Metallionen, vorzugsweise Natriumionen, erfolgt und nach dem die Rohlinge durch Schneiden von Platten und anschließendes Schleifen oder Polieren bis zu den gewünschten endgültigen Linsendimensionen senkrecht zu und in Richtung der optischen Achse fertiggestellt werden. Der Silberrücktausch kann zweckmäßig von einem Zustand des Silbereinbaus (des ersten Ionenaustausches) erfolgen, der nicht bis zu einem homogenen Austauschgleichgewicht mit ganzheitlich erhöhtem Brechzahlniveau geführt hat.

Letzteres schließt aber im ersten Ionenaustausch erzeugte Rohlinge mit homogenem Brechzahlniveau nicht aus, die außer zum Ionenrücktausch auch für optische Komponenten mit ganzheitlich erhöhtem Brechungsindex verwendet werden können.

In einer anderen Ausführung des Verfahrens zur Herstellung von GRIN-Sammellinsen wird zur Brechzahlerhöhung der Einbau von Silberionen (durch Ionenaustausch) ersetzt durch den Einbau eines wesentlichen Anteils von Lithiumionen als Alkalioxid in der Schmelze des Basisglases und die daraus erzeugten Rohlinge mindestens einem Ionenaustauschprozess unterzogen werden, bei dem in einer alkalihaltigen Schmelze ein partieller Austausch von Lithiumionen gegen einwertige Metallionen, vorzugsweise Natriumionen, erfolgt und nach dem die Rohlinge durch Stabziehen bei einer Temperatur zwischen 800 und 1000 °C und anschließendes Verringern des Durchmessers bis zur gewünschten endgültigen Linsenhöhe senkrecht zur optischen Achse sowie Schneiden und Polieren bis zur endgültigen Linsendicke in Richtung der optischen Achse hergestellt werden.

Die mit den obigen Ionenaustauschschritten $Ag^+/M^+$ oder $Li^+/M^+$ erzeugten Alumoborosilikatgläser (wobei $M^+$ bevorzugt $Na^+$ ist) werden vorzugsweise als GRIN-Sammellinsen verwendet oder als optische Komponenten so ausgebildet, dass deren Brechzahlprofil von dem einer herkömmlichen GRIN-Sammellinse abweicht, wobei die Rohlinge auf eine geeignete optische Linsendicke in Richtung der optische Achse und gegebenenfalls geschliffen und poliert werden. Diese polierten Flächen können plan, konkav oder auch konvex sein.

Die verfahrensgemäß hergestellten Zerstreuungs- oder Sammellinsen werden vorzugsweise zur Strahlformung bei Laserdioden oder als GRIN-Linsen für faseroptische Anordnungen der Nachrichtenübertragungs- oder Sensortechnik verwendet. Vorteilhafte Anwendungen ergeben sich außerdem als GRIN-Linsen für Abbildungs- und Beleuchtungsstrahlengänge in der Endoskopie oder allgemein für optische Abtast- und Abbildungseinrichtungen in der Medizintechnik.

Der Grundgedanke der Erfindung basiert auf der überraschend gefundenen Tatsache, dass Kristallisationsdefektbildung, die insbesondere bei thermischen Formgebungsprozessen (z.B. Stabziehen) aber auch beim Erstarren aus der Schmelze und den thermischen Ionenaustauschprozessen entstehen, gegenüber einem herkömmlichen Alumoborosilikatglas (z.B. gemäß DD 269 615 B5) deutlich unterdrückt werden kann, wenn ein oben angegebenes Molverhältnis der Metall-(III)-Oxide zu den Metall-(I)-Oxiden oder zumindest das Molverhältnis zwischen Aluminiumoxid und den Metall-(I)-Oxiden des Basisglases innerhalb eines vorgegebenen Bereichs eingestellt wird. Dabei ergeben sich insbesondere bei der Herstellung von GRIN-Linsen durch Ionenaustausch (vorzugsweise Ag/Na und Li/Na) vorteilhafte optische Komponenten, die bei mechanischer und chemischer Stabilität große Brechzahlunterschiede (bis $\Delta n = 0{,}15$) mit hoher Transmission (und geringer Einfärbung) im sichtbaren und NIR-Spektralbereich erreichen.

Die Erfindung gestattet es, die Herstellung von GRIN-Linsen auf Basis von Alumoborosilikatgläsern zu realisieren, bei der das Basisglas, insbesondere in den thermischen Bearbeitungsschritten zur Erzeugung höherer Brechzahlen und Brechzahlgradienten, eine deutlich verringerte Kristallisationsneigung aufweist und positive Eigenschaften von herkömmlichen Borosilikatgläsern, wie Erschmelzbarkeit unter glastechnologisch üblichen Temperaturen (bis 1600°C) in optisch guter Qualität sowie hoher Brechungsindex nach dem Silbereinbau ohne wesentliche Einfärbung, beibehält.

Die Erfindung soll nachfolgend anhand von mehreren Ausführungsbeispielen näher erläutert werden.

Das erfindungsgemäße Basisglas, in das zumindest in einem Teil seines Volumens Silber-Ionen durch Ionenaustausch gegen Alkaliionen eingebracht werden sollen, ist in einer Grundvariante ein alkalihaltiges Alumoborosilikatglas der Zusammensetzung:

$$20 \leq SiO_2 \leq 50 \text{ mol } \%$$

$$10 \leq B_2O_3 \leq 20 \text{ mol } \%$$

$$10 \leq Al_2O_3 \leq 35 \text{ mol } \%$$

$$10 \leq M_2O \leq 34 \text{ mol } \% \qquad (M = Li, Na, K, Rb)$$

mit

$$1 < \frac{Al_2O_3}{M_2O} < 1,3.$$

In einer verallgemeinerten Grundvariante, die dieselben Oxide enthält, wird das Verhältnis aus den Anteilen (mol%) aller enthaltenen Oxide von dreiwertigen Metallen mit denen der einwertigen Metalle betrachtet und auf den Bereich

$$1,5 < \frac{[Al_2O_3] + [B_2O_3]}{M_2O} < 2$$

eingestellt.

Zunächst wird das Verfahren zur Herstellung von GRIN-Linsen und anderen optischen Elementen mit allgemein erhöhtem Brechungsindex oder einem Brechzahlgradienten in seinen möglichen anwendungsspezifischen Diversifikationen der Verfahrensschritte dargestellt, um das technische Problem bei der Zusammensetzung von Alumoborosilikatgläsern in Bezug auf die erfindungsgemäße Aufgabe deutlich zu machen.

Ein Basisglas mit der beschriebenen Zusammensetzung (Spezialglasmischung zur GRIN-Komponentenherstellung, wie weiter unten noch detailliert ausgeführt) wird bei Temperaturen zwischen 1400 und 1600°C erschmolzen, homogenisiert und in geeignete Halbzeugformen (Barren, Stäbe oder Kugeln) gegossen.
Aus den erstarrten Halbzeugen werden je nach Art der vorgesehenen optischen Komponenten sogenannte Ionenaustausch-Rohlinge hergestellt, die als gefertigte Vorform bereits eine für den Ionenaustausch geeignete Dimensionierung des optischen Elements aufweisen. Das Herstellen der Rohlinge geschieht für unterschiedliche Spezifikationen wie folgt.

a) GRIN-Zylinderlinsen

Aus Barren des Basisglases (quaderförmige Halbzeuge) werden Glasplatten gesägt und feinoptisch auf eine Höhe, die gleich oder geringfügig oberhalb der endgültigen Linsenhöhe (senkrecht zur optischen Achse) ist, geschliffen oder poliert. Zur Herstellung von Glasplatten sind auch thermische Prozesse geeignet, mit denen Glasplatten mit quasipolierter Oberfläche (z.B. Floatglasprozess) hergestellt werden können.

b) GRIN-Stablinsen

i) Aus dem Basisglas werden nach dem Gießen durch Schleifen und Polieren Halbzeuge als Zylinderstäbe gefertigt.
ii) Diese Halbzeuge werden (falls erforderlich) durch einen Stabziehprozess (ähnlich einem Glasfaserziehprozess) bei Temperaturen zwischen 800 und 1000°C in stabförmige Rohlinge mit einem an den Ionenaustauschprozess angepassten Durchmesser überführt, wobei dieser Durchmesser mit dem endgültigen Linsendurchmesser übereinstimmt oder geringfügig größer ist, um Nachbearbeitungen nach dem Ionenaustauschprozess zu ermöglichen.

Der zweite Prozess ii) ist in Bezug auf eine unerwünschte Kristallitbildung besonders kritisch, da der für Keimbildungs- und Wachstumsprozesse von Kristalliten typische Temperaturbereich von niedrigen zu höheren Temperaturen durchschritten wird. D.h., das nach dem Schmelzprozess erkaltete Basisglas wird noch einmal aufgeheizt und durchläuft Temperaturbereiche, bei denen die Geschwindigkeit der Kristallkeimbildung erhöht ist, sowie danach noch höhere Temperaturbereiche, bei denen die Kristallwachstumsgeschwindigkeit hoch ist. Damit ist das Basisglas insbesondere durch das thermische Regime der Rohlingherstellung durch Stabziehen gefährdet, Kristallite auszubilden, die im Endprodukt als sichtbare Defekte in Erscheinung treten können.

Kristallite können aber möglicherweise bereits im Basisglas beim Erstarren der Schmelze entstanden sein oder sich im nachfolgenden Ionenaustauschprozess bilden oder gegebenenfalls wachsen.

c) GRIN-Kugellinsen

i) Aus den Glasbarren des Basisglases werden Rohlinge in kubischer Form durch Schleifen und Polieren zu Kugeln gefertigt oder

ii) die Rohlinge werden durch direkte Formgebung (z.B. Tropfen) aus der Schmelze und anschließendes Schleifen und Polieren zu Kugeln geformt.

A) In einem ersten Ionenaustauschprozess werden die speziell gefertigten Rohlinge in silberhaltige Salzschmelzen bei Temperaturen zwischen 200 und 600°C getaucht. Dabei kommt es zum Austausch der $M^+$-Ionen im Glas (vorzugsweise $Na^+$) durch Silberionen aus der Schmelze. Die Silberionen bewirken eine Brechzahlanhebung. Der Ionenaustausch erfolgt nach den Gesetzen der Interdiffusion.

Wird ein parabelförmiges Brechzahlprofil mit der minimalen Brechzahl im radialen Zentrum des Stabes oder in der Mitte des Querschnitts der Platte erzeugt, entsteht eine Zerstreuungslinsenwirkung.

Wenn dieser Ionenaustauschprozess hinreichend lange durchgeführt wird, so entsteht eine globale Brechzahlanhebung im Basisglas, da sich homogen im Glas ein bestimmtes Austauschgleichgewicht zwischen den Austauschionen (z.B. $Na^+$ und $Ag^+$) einstellt. Für spezielle Anwendungen wird der Silbereinbau jedoch nicht bis zum Austauschgleichgewicht fortgeführt.

B) Zur Erzeugung von Sammellinsen muss anschließend an den ersten Ionenaustauschprozess mit Brechzahlanhebung (Silbereinbau) ein zweiter, mindestens einstufiger Ionenaustauschprozess (partieller Silberrücktausch) erfolgen.

Dazu werden die aus der Silberionenschmelze hervorgegangenen zylindrischen Stäbe oder rechteckigen Platten wieder in $Na^+$-haltige Salzschmelzen eingetaucht und es kommt - ebenfalls nach den Gesetzen der Interdiffusion - zu einem partiellen Rückaustausch der Silberionen im Glas durch Natriumionen aus der Schmelze. Bei geeigneter Prozessführung entstehen parabelförmige Profile mit der maximalen Brechzahl im radialen Zentrum des Stabes oder in der Mitte des Querschnitts der Platte. Es entsteht eine Sammellinsenwirkung mit einem periodischen Strahlverlauf

Die Stäbe oder Platten aus dem Ionenaustauschprozess A oder aus beiden Austauschprozessen A und B werden in geeignet große Stücken vereinzelt (gesägt) und anschließend auf den Stirnflächen planoptisch geschliffen und poliert. Es entstehen GRIN-Stablinsen oder -Zylinderlinsen mit ebenen optischen Stirnflächen. Gegebenenfalls werden auch konvexe oder konkave Stirnflächen hergestellt, um eine refraktive Linsenwirkung hinzu zu fügen.

In den folgenden ersten neun Beispielen werden für das erfindungsgemäße Basisglas unterschiedliche vorteilhafte Ausgestaltungen beschrieben. Zur Prüfung der Kristallisationsneigung der verschiedenen Ausführungen des Basisglases wurde jeweils ein kommerzielles Referenzglas der Zusammensetzung

25 $Na_2O$ · 25 $Al_2O_3$ · 12,5 $B_2O_3$ · 37,5 $SiO_2$ (in mol %)

verwendet.

Beispiel 1

Es wurde ein Glas der Zusammensetzung 25 $Na_2O$ · 27,5 $Al_2O_3$ · 12,5 $B_2O_3$ · 35 $SiO_2$ (in mol %) bei 1500°C erschmolzen. Nach Temperaturbehandlung für 1 h bei Temperaturen ≤ 850 °C war keinerlei Kristallisation nachweisbar, bei Temperaturen von 900 und 950 °C betrug die Kristallisationsgeschwindigkeit ca. 1/4 des Wertes des Referenzglases.

Beispiel 2

Ein Glas der Zusammensetzung 24,5 $Na_2O$ · 1 NapF · 27,5 $Al_2O_3$ . 12,5 $B_2O_3$ · 35 $SiO_2$ zeigte im Temperaturbereich von 700 - 950 °C keine Kristallisation.

Beispiel 3

Ein Glas der Zusammensetzung 24,5 $Na_2O$ · 1 NaF · 30 $Al_2O_3$ · 12,5 $B_2O_3$ · 32,5 $SiO_2$ zeigte keine Kristallisation bei Temperaturen $\leq$ 850 °C. Bei Temperaturbehandlung bei 900 und 950 °C für 1 h erreichte die Kristallisationswachstumsgeschwindigkeit Werte von ca. 1/5 des Referenzglases.

Beispiel 4

Ein Glas der Zusammensetzung 25 $Na_2O$ · 2,5 MgO · 27,5 $Al_2O_3$ · 12,5 $B_2O_3$ · 32,5 $SiO_2$ zeigte keinerlei Kristallisation beim Tempern im Bereich von 700 - 950 °C.

Beispiel 5

Ein Glas der Zusammensetzung 30 $Na_2O$ · 32,5 $Al_2O_3$ · 15 $B_2O_3$ · 22 $SiO_2$ zeigte nach Tempern bei Temperaturen < 800 °C keine Kristallisation. Bei Temperaturen $\geq$ 850 °C betrug die Kristallisationswachstumsgeschwindigkeit ca. 1/4 der Werte des Referenzg lases.

Beispiel 6

Ein Glas der Zusammensetzung 30 $Na_2O$ · 30 $Al_2O_3$ · 20 $B_2O_3$ · 20 $SiO_2$ zeigte bei Temperaturen $\leq$ 850 °C keine Kristallisation. Bei 900 °C lag die Kristallwachstumsgeschwindigkeit bei ca. 1/6 der Werte des Referenzglases. Bei 950 °C wurde etwa die gleiche Kristallisationsgeschwindigkeit wie bei 900 °C gemessen, d.h. ein Anstieg der Kristallisationsgeschwindigkeit mit der Temperatur (wie beim Referenzglas) war nicht zu beobachten.

Beispiel 7

Ein Glas der Zusammensetzung 25 $Na_2O$ · 25 $Al_2O_3$ · 15 $B_2O_3$ · 35 $SiO_2$ zeigte bei Temperaturen $\leq$ 800 °C keine Kristallisation. Die Kristallisationsgeschwindigkeit bei 850 °C betrug ca. 1/3 des Wertes des Referenzglases. Bei Temperaturerhöhung nahm die Kristallisationsgeschwindigkeit wieder ab und erreichte bei 950 °C 1/40 des Wertes des Referenzglases.

Beispiel 8

Ein Glas der Zusammensetzung 20 $Na_2O$ · 22,5 $Al_2O_3$ · 12,5 $B_2O_3$ · 45 $SiO_2$ zeigte beim Tempern bei Temperaturen bis 900 °C keinerlei Kristallisation.

Beispiel 9

Ein Glas der Zusammensetzung 25 $Na_2O$ · 2,5 ZnO · 27,5 $AlO_3$ · 12,5 $B_2O_3$ 32,5 $SiO_2$ zeigte beim Tempern bis 850 °C keine Kristallisation. Bei höheren Temperaturen war die Kristallisationsgeschwindigkeit ca. 1/5 so hoch wie beim Referenzglas.

Beispiel 10

Ein Glas der Zusammensetzung 20 $Na_2O$ · 5 $Li_2O$ 27,5 $Al_2O_3$ · 12,5 $B_2O_3$ · 35 $SiO_2$, bei dem zur Anhebung des Brechzahlniveaus kein Silbereinbau (Ionenaustausch gegen Alkaliionen) erfolgte, sondern statt dessen bereits in der Schmelze ein hoher Anteil von Lithiumoxid (20 %) am Molgehalt der einwertigen Metalloxide, zeigte nach Tempern bei Temperaturen < 750 °C keine Kristallisation.
Bei Temperaturen $\geq$ 750 °C betrug die Kristallisationswachstumsgeschwindigkeit ca. 1/3 der Werte eines Referenzglases, welches in diesem Fall die Zusammensetzung 20 $Na_2O$ · 5 $Li_2O$ · 25 $Al_2O_3$ · 12,5 $B_2O_3$ · 37,5 $SiO_2$ hatte.

Beispiel 11

Ein Glas der Zusammensetzung 10 Na$_2$O · 15 Li$_2$O 27,5 Al$_2$O$_3$ · 12,5 B$_2$O$_3$ · 35 SiO$_2$, bei dem zur Anhebung des Brechzahlniveaus kein Silbereinbau (Ionenaustausch gegen Alkaliionen) erfolgte, sondern statt dessen bereits in der Schmelze ein hoher Anteil von Lithiumoxid (75 %) am Molgehalt der einwertigen Metalloxide, zeigte beim Tempern bei Temperaturen bis 900 °C keinerlei Kristallisation.

Bei dem beschriebenen Verfahren unter Verwendung der angegebenen Alumoborosilikatgläser ist der Umfang der möglichen Variationen der Glaszusammensetzungen und somit der Grad der erreichbaren Brechzahlgradienten durch die Ionenaustauschprozesse keinesfalls ausgeschöpft. Weitere Abwandlungen der Zusammensetzung des Basisglases durch geringfügige Zusätze (< 3 mol%) von Metalloxiden oder -fluoriden, die hier nicht angegeben wurden, oder durch Überschreiten der angegebenen Bereichsgrenzen fallen ebenfalls unter die erfindungsgemäße Lehre, solange die Grundidee der Erfindung des definierten Überschusses von allen dreiwertigen Oxiden (insbesondere Aluminiumoxid) zu den einwertigen Alkalimetalloxiden eingehalten ist, um die Kristallisationsneigung des Glases bei der Herstellung von optischen GRIN-Komponenten zu unterdrücken.

## Patentansprüche

1. Alkalihaltiges Alumoborosilikatglas zur Herstellung von optischen Komponenten mit Brechzahlgradienten durch Ionenaustausch einwertiger Metallionen, das im Basisglas folgende Anteile aufweist:

$$20 \leq SiO_2 \leq 50 \text{ mol } \%$$

$$10 \leq M'''_2O_3 \leq 20 \text{ mol } \% \qquad (M''' = B, Ga),$$

$$10 \leq Al_2O_3 \leq 35 \text{ mol } \%$$

$$10 \leq M_2O \leq 34 \text{ mol } \% \qquad (M = Li, Na, K, Rb),$$

wobei ein Molverhältnis aller dreiwertigen Oxide zu einwertigen Metalloxiden mit:

$$1,5 < \frac{[Al_2O_3] + [M'''_2O_3]}{M_2O} < 2$$

eingestellt ist, um die Kristallisationsneigung des Basisglases für nachfolgende thermische Verarbeitungsprozesse zu reduzieren, und
das weitere Beimengungen höchstens bis zu jeweils 2,5 mol % enthalten kann, wobei die Beimengungen nur entweder MgO oder ZnO enthalten.

2. Alkalihaltiges Alumoborosilikatglas nach Anspruch 1, wobei folgendes Molverhältnis mit

$$1 < \frac{Al_2O_3}{M_2O} < 1,3$$

eingestellt ist.

3. Alumoborosilikatglas nach den Anspruch 2, bei dem das Molverhältnis von

$$1{,}05 \leq \frac{Al_2O_3}{M_2O} \leq 1{,}1$$

in der Schmelze des Basisglases eingestellt ist.

4. Alumoborosilikatglas nach Anspruch 1 oder 2, bei dem
das Basisglas zwischen 15 und 30 mol % $M_2O$, vorzugsweise $Na_2O$, enthält.

5. Alumoborosilikatglas nach Anspruch 1 oder 2, bei dem
das Basisglas bereits $Ag_2O$ in einer Konzentration von bis zu 2 mol % enthält.

6. Alumoborosilikatglas nach Anspruch 1 oder 2, bei dem
Lithiumoxid an den einwertigen Metalloxiden mit einem Anteil zwischen 10 und 80 % beteiligt ist.

7. Alumoborosilikatglas nach Anspruch 1 oder 2, bei dem im Basisglas als Beimengungen
ein Alkalifluorid oder mindestens ein Oxid oder Fluorid der Metalle Zink, Magnesium, Kalzium; Strontium, Barium, Niob und Tantal
enthalten sind.

8. Verfahren zur Herstellung kristallitfreier optischer Komponenten mit mindestens partiell geänderter Brechzahl unter Verwendung eines Alumoborosilikatglases nach einem oder mehreren der Ansprüche 1 bis 7, mit folgenden Schritten:

   - Erschmelzen eines Basisglases der angegebenen Zusammensetzung bei Temperaturen von 1400 - 1600 °C und Homogenisierung der Glasschmelze,
   - Gießen der Glasschmelze zur Erzeugung von Halbzeugen für optische Komponenten,
   - Formgebung der Halbzeuge zu Rohlingen für einen Ionenaustausch, bei der die Halbzeuge auf eine für den Ionenaustausch geeignete Form verringert werden, wobei die Rohlinge an die gewünschte Abmessung der optischen Komponenten in wenigstens einer für den Ionenaustausch vorgesehenen Dimension senkrecht zu deren optischer Achse angepasst sind,
   - Ionenaustausch durch wenigstens einmaliges Einbringen der Rohlinge in eine Salzschmelze, um ein gewünschtes Brechzahlprofil zu erzeugen.

9. Verfahren nach Anspruch 8, bei dem die Rohlinge durch Schneiden von Platten aus quaderförmigen Halbzeugen des Basisglases und anschließendes Schleifen oder Polieren bis zu einer Höhe, die gleich oder geringfügig oberhalb der endgültigen Linsenhöhe senkrecht zur optischen Achse ist, hergestellt werden.

10. Verfahren nach Anspruch 8, bei dem die Rohlinge durch Stabziehen bei einer Temperatur zwischen 800 und 1000°C aus stabförmigen Halbzeugen des Basisglases und anschließendes Schneiden, Schleifen oder Polieren bis zu einem Durchmesser, der gleich oder geringfügig oberhalb der endgültigen Linsenhöhe senkrecht zur optischen Achse ist, hergestellt werden.

11. Verfahren nach Anspruch 8, bei dem die Rohlinge durch Schneiden von Würfeln aus einem quaderförmigen Halbzeug des Basisglases und anschließendes Schleifen und Polieren bis zu einer Kugelform, deren Durchmesser gleich oder geringfügig oberhalb des endgültigen Linsendurchmessers ist, hergestellt werden.

12. Verfahren nach Anspruch 8, bei dem die Rohlinge direkt aus der Schmelze des Basisglases durch einen Floatglasprozess bei einer Temperatur zwischen 800 und 1600°C auf eine Höhe, die gleich oder geringfügig oberhalb der endgültigen Linsenhöhe senkrecht zur optischen Achse ist, hergestellt werden.

13. Verfahren nach Anspruch 8, bei dem die Rohlinge nach dem Einbau der Silberionen durch Schneiden der Rohlinge und anschließendes Schleifen oder Polieren bis zu den gewünschten endgültigen Linsendimensionen senkrecht zu und in Richtung der optischen Achse hergestellt werden.

**14.** Verwendung von nach Anspruch 13 hergestellten optischen Komponenten aus Alumoborosilikatglas als GRIN-Zerstreuungslinsen.

**15.** Verwendung von nach Anspruch 13 hergestellten optischen Komponenten aus Alumoborosilikatglas, bei denen beim Silbereinbau ein Austauschgleichgewicht erreicht wurde, als optische Komponenten mit einheitlich erhöhtem Brechzahlniveau.

**16.** Verfahren nach Anspruch 8, bei dem beim Ionenaustausch ein Einbau von Silberionen gegen Alkaliionen durch wenigstens einmaliges Einbringen der Rohlinge in eine silberhaltige Salzschmelze bei Temperaturen zwischen 200 und 600 °C erfolgt, bis ein gewünschtes Brechzahlprofil eingestellt ist.

**17.** Verfahren nach Anspruch 16, bei dem die Rohlinge nach dem Silbereinbau mindestens einem weiteren Ionenaustauschprozess in einer alkalihaltigen Schmelze unterzogen werden, bei dem ein partieller Rücktausch von Silberionen gegen einwertige Metallionen, vorzugsweise Natriumionen, erfolgt und nach dem die Rohlinge durch Schneiden von Platten und anschließendes Schleifen oder Polieren bis zu den gewünschten endgültigen Linsendimensionen senkrecht zu und in Richtung der optischen Achse fertiggestellt werden.

**18.** Verfahren nach Anspruch 8, bei dem nach einem in der Schmelze des Basisglases erfolgten Einbau eines hohen Anteils von Lithiumionen als Metalloxid der Ionenaustausch als partieller Austausch von Lithiumionen gegen andere einwertige Metallionen, vorzugsweise Natriumionen, in einer alkalihaltigen Schmelze erfolgt und durch anschließendes Verringern des Durchmessers bis zur gewünschten endgültigen Linsenhöhe senkrecht zur optischen Achse sowie Schneiden und Polieren bis zur endgültigen Linsendicke in Richtung der optischen Achse hergestellt werden.

**19.** Verwendung von nach Anspruch 17 oder 18 hergestellten optischen Komponenten als GRIN-Sammellinsen.

**20.** Verwendung von nach mindestens einem der Ansprüche 13, 15, 17 oder 18 hergestellten optischen Komponenten zur Strahlformung von Laserdioden.

**21.** Verwendung von nach mindestens einem der Ansprüche 13, 15, 17 oder 18 hergestellten optischen Komponenten als GRIN-Linsen für faseroptische Anordnungen der Nachrichtenübertragungs- oder Sensortechnik.

**22.** Verwendung von nach mindestens einem der Ansprüche 13, 15, 17 oder 18 hergestellten optischen Komponenten als GRIN-Linsen für Abbildungs- und Beleuchtungsstrahlengänge in der Medizintechnik, insbesondere der Endoskopie.

**Claims**

**1.** Alkali-containing aluminoborosilicate glass for the production of optical components with refractive index gradients which are produced through ion exchange of monovalent metal ions in a base glass of the following composition:

$$20 \leq SiO_2 \leq 50 \text{ mole \%}$$

$$10 \leq M'''_2O_3 \leq 20 \text{ mole \%} \qquad (M'''=B, Ga)$$

$$10 \leq Al_2O_3 \leq 35 \text{ mole \%}$$

$$10 \leq M_2O \leq 34 \text{ mole \%} \qquad (M=Li, Na, K, Rb),$$

wherein a molar ratio of all trivalent oxides to monovalent oxides of

$$1.5 < \frac{[Al_2O_3] + [M_2^{'''}O_3]}{M_2O} < 2$$

is adjusted in order to reduce the tendency of the base glass towards crystallisation for subsequent thermal treatment processes, and wherein said aluminoborosilicate glass may contain further admixtures up to a maximum of 2.5 mole % each, said admixtures containing only MgO or ZnO.

2.  Aluminoborosilicate glass according to claim 1, wherein a molar ratio of

$$1 < \frac{Al_2O_3}{M_2O} < 1.3$$

is adjusted.

3.  Aluminoborosilicate glass according to claim 2, wherein a molar ratio of

$$1.05 \le \frac{Al_2O_3}{M_2O} \le 1.1$$

is adjusted in the melt of the base glass.

4.  Aluminoborosilicate glass according to claim 1 or 2, wherein the base glass contains between 15 and 30 mole % of $M_2O$, preferably $Na_2O$.

5.  Aluminoborosilicate glass according to claim 1 or 2, wherein the base glass already contains $Ag_2O$ at a concentration of up to 2 mole %.

6.  Aluminoborosilicate glass according to claim 1 or 2, wherein lithium oxide has a proportion between 10% and 80% of the monovalent metal oxides.

7.  Aluminoborosilicate glass according to claim 1 or 2, wherein an alkali fluoride or at least one oxide or fluoride of the metals zinc, magnesium, calcium, strontium, barium, niobium and tantalum are contained as admixtures in the base glass.

8.  A method for producing crystallite-free optical components with an at least partly changed refractive index which are produced from an aluminoborosilicate glass according to any one of claims 1 to 7, the method comprising:

    - melting a base glass of the indicated composition at temperatures of 1400 °C-1600 °C and homogenizing the molten glass;
    - casting the molten glass for producing semifinished articles for optical components;
    - shaping the semifinished articles to form blanks for the ion exchange, wherein the semifinished articles are reduced to a shape suitable for the ion exchange, said blanks being adapted to the desired dimension of the optical components in at least one dimension intended for the ion exchange perpendicular to their optical axis; and
    - ion exchange by introducing the blanks at least once into a molten salt in order to generate a desired refractive index profile.

9.  The method according to claim 8, wherein the blanks are produced by cutting plates from square semifinished articles of base glass and subsequent grinding or polishing until achieving a height that is equal to or slightly greater than the final lens height perpendicular to the optical axis.

10. The method according to claim 8, wherein the blanks are produced from bar-rod-shaped semifinished articles of the base glass by rod drawing at a temperature between 800 °C and 1000 °C and subsequent cutting, grinding or polishing until reaching a diameter that is equal to or slightly greater than the final lens height perpendicular to the optical axis.

11. The method according to claim 8, wherein the blanks are produced by cutting cubes from a square semifinished article of base glass and subsequent grinding and polishing until achieving a spherical shape whose diameter is equal to or slightly greater than the final lens diameter.

12. The method according to claim 8, wherein the blanks are produced directly from the melt of the base glass by means of a float glass process at a temperature between 800 °C and 1600 °C at a height that is equal to or slightly greater than the final lens height perpendicular to the optical axis.

13. The method according to claim 8, wherein, after the introduction of silver ions, the blanks are further produced by cutting the blanks and subsequent grinding or polishing until the desired final lens dimensions are achieved perpendicular to and in the direction of the optical axis.

14. Use of optical components produced from aluminoborosilicate glasses according to claim 13, said use being as GRIN dispersive lenses.

15. Use of optical components produced from aluminoborosilicate glasses according to claim 13, wherein an exchange equilibrium was achieved during the introduction of silver, said use being as optical components with integrally increased refractive index level.

16. The method according to claim 8, wherein silver ions are introduced in an ion exchange with alkali ions by introducing the blanks at least once into a silver-containing molten salt at temperatures between 200 °C and 600 °C until a desired refractive index profile is adjusted.

17. The method according to claim 16, wherein, after the introduction of silver, the blanks are subjected to at least one additional ion exchange process in an alkali-containing melt in which there is a partial back-exchange of silver ions with monovalent metal ions, preferably sodium ions, after which the blanks are finished by cutting plates and subsequent grinding or polishing until achieving the desired final lens dimensions perpendicular to and in the direction of the optical axis.

18. The method according to claim 8, wherein, after the introduction of a high proportion of lithium ions into the melt of the base glass, a partial exchange of lithium ions with other monovalent metal ions, preferably sodium ions, is carried out during the ion exchange in an alkali-containing melt, the blanks being produced by subsequently reducing the diameter until the desired final lens height is achieved perpendicular to the optical axis and by cutting and polishing until the final lens thickness is achieved in the direction of the optical axis.

19. Use of optical components produced according to claim 17 or 18, said use being as GRIN collecting lenses.

20. Use of optical components produced according to at least one of claims 13, 15, 17, or 18, said use being for beam shaping of laser diodes.

21. Use of optical components produced according to at least one of claims 13, 15, 17, or 18, said use being as GRIN lenses for fiber-optic arrangements in communications technology or sensor technology.

22. Use of optical components produced according to at least one of claims 13, 15, 17, or 18, said use being as GRIN lenses for imaging beam paths and illumination beam paths in medical engineering, particularly in endoscopy.

**Revendications**

1. Verre aluminoborosilicaté alcalin pour la fabrication de composants optiques, qui présentent des gradients d'indice de réfraction, par échange ionique d'ions métalliques monovalents, ledit verre ayant la composition suivante dans le verre de base:

$$20 \leq SiO_2 \leq 50 \text{ \% en moles}$$

$$10 \leq M'''_2O_3 \leq 20 \text{ \% en moles} \qquad (M'''=B, Ga)$$

$$10 \leq Al_2O_3 \leq 35 \text{ \% en moles}$$

$$10 \leq M_2O \leq 34 \text{ \% en moles} \qquad (M=Li, Na, K, Rb),$$

le rapport moléculaire entre tous les oxydes trivalents et les oxydes métalliques monovalents étant réglé à

$$1.5 < \frac{[Al_2O_3]+[M'''_2O_3]}{M_2O} < 2$$

afin de réduire la tendance de cristallisation du verre de base pour des procédés de traitement thermique suivants, et ledit verre aluminoborosilicaté pouvant présenter d'autres additions jusqu'à un maximum respectif de 2,5 % en moles, lesdites additions contenant exclusivement MgO ou ZnO.

**2.** Verre aluminoborosilicaté selon la revendication 1, dans lequel le rapport moléculaire est réglé à

$$1 < \frac{Al_2O_3}{M_2O} < 1.3 \ .$$

**3.** Verre aluminoborosilicaté selon la revendication 2, dans lequel le rapport moléculaire est réglé à

$$1.05 \leq \frac{Al_2O_3}{M_2O} \leq 1.1$$

dans le verre de base fondu.

**4.** Verre aluminoborosilicaté selon la revendication 1 ou 2, dans lequel le verre de base contient entre 15 et 30 % en moles de $M_2O$, de préférence $Na_2O$.

**5.** Verre aluminoborosilicaté selon la revendication 1 ou 2, dans lequel le verre de base contient déjà $Ag_2O$ à une concentration maximale de 2 % en moles.

**6.** Verre aluminoborosilicaté selon la revendication 1 ou 2, dans lequel l'oxyde de lithium présente un taux d'entre 10% et 80% des oxydes métalliques monovalents.

**7.** Verre aluminoborosilicaté selon la revendication 1 ou 2, dans lequel les additions contenues dans le verre de base comportent un fluorure alcalin ou au moins un oxyde ou fluorure des métaux zinc, magnésium, calcium, strontium, baryum, niobium et tantale.

**8.** Procédé de fabrication de composants optiques sans cristallite et présentant un indice de réfraction au moins partiellement modifié, lesdits composants optiques étant fabriqués en utilisant un verre aluminoborosilicaté selon l'une quelconque des revendications 1 à 7, ledit procédé comprenant les étapes suivantes:

- fonte d'un verre de base ayant la composition indiquée à des températures de 1400 °C-1600 °C et homogénéisation du verre fondu;
- coulée du verre fondu pour produire des démi-produits pour des composants optiques;
- façonnage des démi-produits pour former des pièces brutes pour un échange ionique en réduisant lesdits démi-produits à une forme appropriée pour l'échange ionique, lesdites pièces brutes étant adaptées à la dimension voulue des composants optiques en au moins une dimension prévue pour l'échange ionique perpendiculairement à leur axe optique; et
- échange ionique en introduisant au moins une fois les pièces brutes dans des sels fondus afin de produire un profil d'indice de réfraction voulu.

9. Procédé selon la revendication 8, dans lequel les pièces brutes sont fabriquées par découpage de plaques à partir de démi-produits parallélépipèdiques en verre de base, suivi d'un meulage ou polissage jusqu'à une hauteur identique ou légèrement supérieure à la hauteur de lentille finale perpendiculairement à l'axe optique.

10. Procédé selon la revendication 8, dans lequel les pièces brutes sont fabriquées par tirage de barreaux à partir de démi-produits en forme de barreaux en verre de base à une température d'entre 800 °C et 1000 °C, suivi d'un meulage ou d'un polissage jusqu'à un diamètre identique ou légèrement supérieur à la hauteur de lentille finale perpendiculairement à l'axe optique.

11. Procédé selon la revendication 8, dans lequel les pièces brutes sont fabriquées par découpage de cubes à partir d'un démi-produit parallélépipèdique en verre de base, suivi d'un meulage et d'un polissage jusqu'à obtenir une forme sphérique dont le diamètre soit identique ou légèrement supérieur au diamètre de lentille final.

12. Procédé selon la revendication 8, dans lequel les pièces brutes sont fabriquées directement à partir du verre de base fondu par un procédé float à une température d'entre 800 °C et 1600 °C jusqu'à une hauteur identique ou légèrement supérieure à la hauteur de lentille finale perpendiculairement à l'axe optique.

13. Procédé selon la revendication 8, dans lequel, après l'incorporation des ions d'argent, les pièces brutes sont fabriquées par coupage des pièces brutes, suivi d'un meulage ou d'un polissage jusqu'à obtenir les dimensions de lentille finales voulues perpendiculairement à l'axe optique et dans la direction de celui-ci.

14. Utilisation de composants optiques, fabriqués selon la revendication 13 à partir du verre aluminoborosilicaté, en tant que lentilles GRIN diffusantes.

15. Utilisation de composants optiques, fabriqués selon la revendication 13 à partir du verre aluminoborosilicaté, en tant que composants optiques présentant un niveau d'indice de réfraction uniformément élevé, ayant atteint un équilibre d'échange lors de l'incorporation d'argent.

16. Procédé selon la revendication 8, dans lequel des ions d'argent sont introduits lors d'un échange ionique avec des ions alcalins en introduisant les pièces brutes au moins une fois dans des sels fondus contenant de l'argent à des températures d'entre 200 °C et 600 °C jusqu'à atteindre un profil d'indice de réfraction voulu.

17. Procédé selon la revendication 16, dans lequel, après l'incorporation de l'argent, on soumet les pièces brutes à au moins un procédé d'échange ionique additionnel dans une masse fondue alcaline, ce procédé comportant un rechange partiel des ions d'argent avec des ions métalliques monovalents, de préférence des ions de sodium, après lequel échange les pièces brutes sont finis par découpage de plaques et, ensuite, par meulage ou polissage jusqu'aux dimensions de la lentille finales voulues perpendiculairement à l'axe optique et dans la direction de celui-ci.

18. Procédé selon la revendication 8, dans lequel, après incorporation d'un taux élevé de ions de lithium dans le verre de base fondu, l'échange ionique s'effectue en tant qu'échange partiel d'ions de lithium par d'autres ions métalliques monovalents, de préférence des ions de sodium, dans une masse fondue alcaline, les pièces brutes étant fabriquées ensuite par réduction du diamètre jusqu'à la hauteur de la lentille finale voulue perpendiculairement à l'axe optique et par coupage et polissage jusqu'à l'épaisseur de lentille finale dans la direction de l'axe optique.

19. Utilisation de composants optiques, fabriqués selon la revendication 17 ou 18, en tant que lentilles GRIN convergentes.

20. Utilisation de composants optiques, fabriqués selon au moins l'une quelconque des revendications 13, 15, 17 ou 18, pour la formation de faisceau de diodes laser.

21. Utilisation de composants optiques, fabriqués selon au moins l'une quelconque des revendications 13, 15, 17 ou 18, en tant que lentilles GRIN pour des ensembles à fibre optique dans la technique des télécommunications ou la technique des détecteurs.

22. Utilisation de composants optiques, fabriqués selon au moins l'une quelconque des revendications 13, 15, 17 ou 18, en tant que lentilles GRIN pour des chemins optiques de représentation et d'illumination en technique médicale, notamment en endoscopie.

EP 1 544 176 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4902330 A
- DD 269615 B5
- US 6511932 B1
- EP 0918235 A2
- DE 3803420 A1
- WO 0214233 A1
- US 2003045420 A1
- US 5007948 A